# EUROPEAN PATENT SPECIFICATION

(11) **EP 4 439 769 B1**
(45) Date of publication and mention of the grant of the patent: **28.10.2026**
(21) Application number: 23740520.4
(22) Date of filing: 13.01.2023
(51) Int. Cl.: H01M 50/60, H01M 10/058, H01M 50/446, H01M 50/403, H01M 50/449, H01M 10/0583, H01M 10/0569, H01M 10/0567, H01M 10/052, H01M 50/46, H01M 10/42, H01M 10/0565

(54) **METHOD FOR MANUFACTURING SECONDARY BATTERY**
VERFAHREN ZUR HERSTELLUNG EINER SEKUNDÄRBATTERIE
PROCÉDÉ DE FABRICATION DE BATTERIE SECONDAIRE

(30) Priority: 14.01.2022 KR 20220006032
(43) Date of publication of application: 02.10.2024
(73) Proprietor: LG Energy Solution, Ltd., Seoul 07335 (KR)
(72) Inventor: LIM, Tae Seob, Daejeon 34122 (KR); RYU, Ji Hoon, Daejeon 34122 (KR); KIM, Je Young, Daejeon 34122 (KR); KIM, Dong Kyu, Daejeon 34122 (KR); YOON, Yeo Min, Daejeon 34122 (KR)
(74) Representative: Hoffmann Eitle
(86) International application number: PCT/KR2023/000697
(87) International publication number: WO 2023/136677

(56) References cited:
- JP-A- 2017 050 215
- KR-A- 20160 040 128
- KR-A- 20160 079 623
- KR-A- 20190 106 780
- KR-A- 20190 118 452

## Description

### TECHNICAL FIELD

### Cross-reference to Related Applications

This application claims the benefit of Korean Patent Application No. 10-2022-0006032, filed on January 14, 2022, in the Korean Intellectual Property Office.

### Technical Field

The present invention relates to a method for manufacturing a secondary battery.

### BACKGROUND ART

As technology development and demand with respect to electronic devices have increased, demand for secondary batteries as an energy source has been significantly increased, and, among these secondary batteries, lithium secondary batteries having high energy density and high voltage have been commercialized and widely used.

The secondary batteries may be manufactured by, for example, accommodating an electrode assembly in which electrodes and a separator are alternately laminated in a battery case, injecting an electrolyte solution into the battery case, and sealing the battery case.

In this case, the separator is generally used in which ceramic coating layers containing inorganic particles and a binder are formed on both sides of a porous substrate. In this case, the binder is generally included in a large amount for easy adhesion of the electrode and the separator, and in this case, there are limitations in that resistance increases due to excessive use of the binder, and energy density of the battery decreases as the thickness of the separator increases.

In order to prevent the above-described limitations, when the binder content in the ceramic coating layers included in the separator is lowered, a stiffness of the cell may be decreased due to the deterioration in the adhesion between the electrode and the separator, and the quality may be deteriorated, for example, misalignment of the electrodes.

Meanwhile, an electrolyte in a liquid state, in particular, an ion conductive organic liquid electrolyte, in which a salt is dissolved in a non-aqueous organic solvent, has been mainly used as a conventional electrolyte in a secondary battery. However, such a liquid electrolyte has limitations such as the possibility of leakage out of the secondary battery, the deterioration of safety, and a decrease in cell stiffness.

In this regard, research to commercialize a polymer electrolyte, such as a gel polymer electrolyte, instead of the liquid electrolyte, has emerged. There are advantages in that the gel polymer electrolyte can be prevented from leaking out of the secondary battery, and the cell stiffness is excellent. However, the gel polymer electrolyte has limitations of a high interfacial resistance and low ionic conductivity compared to the liquid electrolyte.

In addition, generally, a secondary battery including a gel polymer electrolyte is prepared by adding a lithium salt, an oligomer compound, and a polymerization initiator to an organic solvent to prepare a gel polymer electrolyte composition, injecting the gel polymer electrolyte composition into a battery case in which an electrode assembly is accommodated to impregnate the electrode assembly, and curing the gel polymer electrolyte composition, but there is a limitation in that the oligomer compound of the gel polymer electrolyte composition is pre-gelled by the polymerization initiator before injecting the gel polymer electrolyte composition. This limitation further deteriorates the ion conductivity and increase the resistance due to insufficient impregnation of the electrode assembly.

Korean Patent Application No. 10-2019-0118452 relates to a lithium secondary battery including a positive electrode, a negative electrode, a separator, which includes a coating layer including an organic binder and inorganic particles, and a gel polymer electrolyte formed by polymerization of an oligomer, wherein the organic binder and the gel polymer electrolyte are bonded by an epoxy ring-opening reaction, and a method of preparing the same.

In view of the above, there is a need to develop a secondary battery in which resistance reduction and cell stiffness of the secondary battery are simultaneously improved.

### DISCLOSURE OF THE INVENTION

### TECHNICAL PROBLEM

The present invention provides a method for manufacturing a secondary battery having reduced resistance and simultaneously having an improvement in both cell stiffness and mechanical durability.

### TECHNICAL SOLUTION

According to an aspect of the present invention as set out in the appended claims, there is provided a method for manufacturing a secondary battery, the method including: preparing an electrode assembly in which electrodes and a separator are alternately laminated, and an adhesive composition is applied to the surface of at least one among the electrodes and the separator, thereby allowing the electrodes and the separator to adhere to each other; accommodating the electrode assembly in a battery case; injecting a gel polymer electrolyte composition into the battery case to impregnate the electrode assembly with the gel polymer electrolyte composition; curing the gel polymer electrolyte composition; and sealing the battery case, wherein the separator includes a porous substrate and ceramic coating layers disposed on both surfaces of the porous substrate, the ceramic coating layers comprises from 92 wt% to less than 100 wt% of inorganic particles and from more than 0 to 8 wt% of a binder, the gel polymer electrolyte composition includes a lithium salt, an organic solvent, and an oligomer compound and does not include a polymerization initiator, the adhesive composition includes an adhesive and a polymerization initiator, the adhesive and the polymerization initiator are dissolved by the injection of the gel polymer electrolyte composition, and the gel polymer electrolyte composition is cured by the dissolved polymerization initiator.

### ADVANTAGEOUS EFFECTS

The method for manufacturing a secondary battery according to the present invention includes an electrode assembly in which electrodes and a separator are alternately laminated, and a gel polymer electrolyte, wherein the separator contains inorganic particles and a binder in specific amounts. Since the ceramic coating layers included in the separator contains a small amount of the binder, an increase in resistance due to an excessive amount of the binder may be prevented, and the gel polymer electrolyte may compensate for a decrease in cell stiffness of the secondary battery accompanied by the reduction of resistance. Accordingly, the secondary battery manufactured by the method for manufacturing a secondary battery according to the present invention can reduce the resistance of the secondary battery and improve both the cell stiffness and the mechanical durability of the secondary battery according to the combination of the above components.

Also, the method for manufacturing a secondary battery according to the present invention is characterized by manufacturing a secondary battery including: an electrode assembly prepared by alternately laminating electrodes and a separator, and bonding the electrodes and the separator by an adhesive composition; and a gel polymer electrolyte formed by curing the gel polymer electrolyte composition. In this case, the gel polymer electrolyte composition does not include a polymerization initiator, and the polymerization initiator required for curing the gel polymer electrolyte composition is included in the adhesive composition. The polymerization initiator included in the adhesive composition is dissolved by the gel polymer electrolyte composition and used to cure the gel polymer electrolyte composition. According to the present invention, the pre-gelation of the gel polymer electrolyte composition, which may occur when the gel polymer electrolyte composition contains a polymerization initiator, is prevented, and thus the impregnation of the electrode assembly with the gel polymer electrolyte composition may be smoothly carried out, thereby preventing the limitations of resistance increase and life reduction due to the pre-gelation.

### BRIEF DESCRIPTION OF THE DRAWINGS

FIG. 1 is a schematic side view of an exemplary electrode assembly for describing a preparation step of an electrode assembly in the method for manufacturing a secondary battery of the present invention.
FIG. 2 is a schematic plan view of a separator or an electrode for describing the preparation step of the electrode assembly in the method for manufacturing a secondary battery of the present invention.
FIG. 3 is a schematic side view of a separator for describing the preparation step of the electrode assembly in the method for manufacturing a secondary battery of the present invention.
FIG. 4 is a view for describing a preparation process of the electrode assembly for describing the method for manufacturing a secondary battery of the present invention.
FIG. 5 is a view for describing a preparation process of the electrode assembly for describing the method for manufacturing a secondary battery of the present invention.
FIG. 6 is a view for describing a preparation process of the electrode assembly for describing the method for manufacturing a secondary battery of the present invention.
FIG. 7 is a view for describing a preparation process of the electrode assembly for describing the method for manufacturing a secondary battery of the present invention.
FIG. 8 is a view for describing an accommodating step of the electrode assembly in the method for manufacturing a secondary battery of the present invention.
FIG. 9 is a view for describing an injection step of a gel polymer electrolyte composition and an impregnation step of the electrode assembly in the method for manufacturing a secondary battery of the present invention.
FIG. 10 is a view for describing a curing step of a gel polymer electrolyte in the method for manufacturing a secondary battery of the present invention.
FIG. 11 is a photograph of the surface of a separator included in a secondary battery manufactured by the manufacturing method of Example 1.
FIG. 12 is a photograph of the surface of a separator included in a secondary battery manufactured by the manufacturing method of Comparative Example 3.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The expression "average particle diameter (D50)" in the present specification may be defined as a particle diameter at a cumulative volume of 50% in a particle size distribution curve. The average particle diameter (D₅₀), for example, may be measured by using a laser diffraction method. The laser diffraction method may generally measure a particle diameter ranging from a submicron level to several millimeters, and may obtain highly reproducible and high resolution results.

Hereinafter, the secondary battery of the present invention will be described in detail with reference to the accompanying drawings. In adding reference numerals to components in each drawing, the same components may have the same reference numerals, if possible, although they are shown in different drawings. Moreover, detailed descriptions related to well-known functions or configurations may be omitted in order not to unnecessarily obscure subject matters of the present invention.

### <Method for Manufacturing Secondary Battery>

The present invention relates to a method for manufacturing a secondary battery, and specifically, to a method for manufacturing a lithium secondary battery.

The present invention provides a method for manufacturing a secondary battery, the method including: preparing an electrode assembly 100 in which electrodes 110 and 120 and a separator 130 are alternately laminated, and an adhesive composition 140 is applied to the surface of at least one among the electrodes 110 and 120 and the separator 130, thereby allowing the electrodes 110 and 120 and the separator 130 to adhere to each other; accommodating the electrode assembly 100 in a battery case 300; injecting a gel polymer electrolyte composition 200 into the battery case 300 to impregnate the electrode assembly 100 with the gel polymer electrolyte composition 200; and curing the gel polymer electrolyte composition 200, wherein the separator 130 includes a porous substrate 131 and ceramic coating layers 132a and 132b disposed on both surfaces of the porous substrate 131, the ceramic coating layers 132a and 132b comprises from 92 wt% to less than 100 wt% of inorganic particles and from more than 0 to 8 wt% of a binder, the gel polymer electrolyte composition 200 includes a lithium salt, an organic solvent, and an oligomer compound and does not include a polymerization initiator, and the adhesive composition 140 includes an adhesive and a polymerization initiator, the adhesive and the polymerization initiator are dissolved by the injection of the gel polymer electrolyte composition 200, and the gel polymer electrolyte composition 200 is cured by the dissolved polymerization initiator.

### (1) Step for Preparing Electrode Assembly

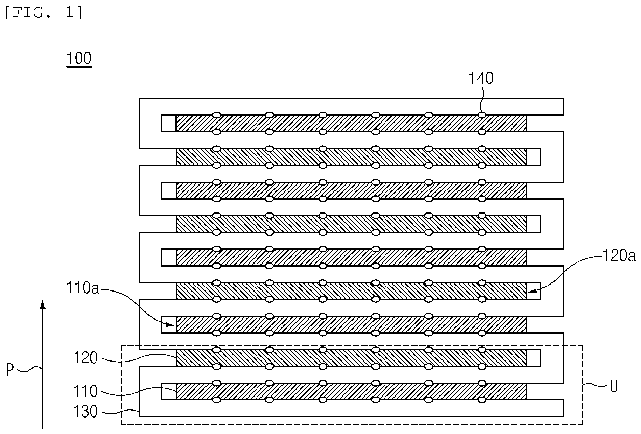

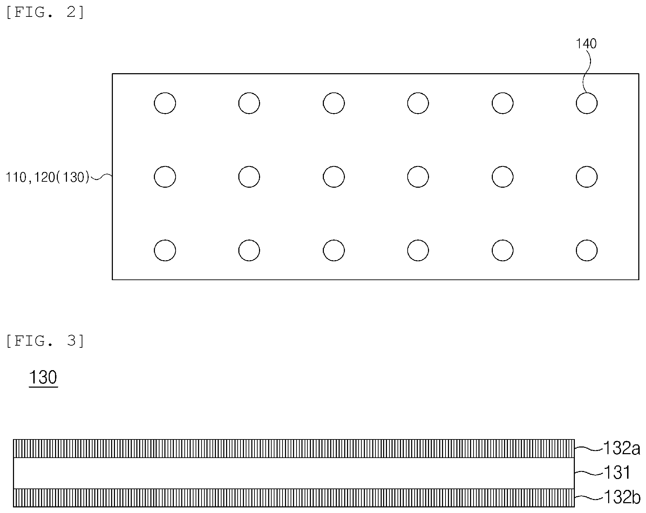

Referring to FIGS. 1 and 2, an electrode assembly 100 in which electrodes 110 and 120 and a separator 130 are alternately laminated and an adhesive composition 140 is applied to the surface of at least one among the electrodes 110 and 120 and the separator 130, thereby allowing the electrodes 110 and 120 and the separator 130 to adhere to each other is prepared.

The electrode assembly 100 includes a plurality of electrodes 110 and 120 laminated in a vertical direction P. The number of the electrodes 110 and 120 may be two or more. As used herein, the term "vertical direction" may mean a vertical direction based on the ground, and is only for describing the laminating direction of the electrodes, but not for limiting the angle of the stacking direction.

The electrodes 110 and 120 may include a first electrode 110 and a second electrode 120. As illustrated in FIG. 1, the first electrode 110 and the second electrode 120 may be alternately laminated. The electrodes 110 and 120 may be alternately laminated with the separator 130 interposed therebetween. The first electrode 110 may be a positive electrode, and the second electrode 120 may be a negative electrode. Alternatively, the first electrode 110 may be a negative electrode, and the second electrode 120 may be a positive electrode. Each of the first electrode and the second electrode may be one or more, specifically two or more.

The first electrode 110 and the second electrode 120 may have a structure in which an active material slurry is applied to a current collector. The first electrode 110 and the second electrode 120 may be formed by applying, drying, and rolling the active material slurry on both surfaces of the current collector. The active material slurry may be formed by adding a granular active material, a conductive agent, a binder, or the like in a solvent, and stirring the resultant solution. In the first electrode 110 and the second electrode 120, an active material, a conductive agent, a binder, or the like, which are used for a positive electrode or a negative electrode in the art, may be used without limitation.

The current collector is not particularly limited so long as it has high conductivity without causing adverse chemical changes in the battery. Specifically, the current collector may include at least one selected from the group consisting of copper, stainless steel, aluminum, nickel, titanium, sintered carbon, and an aluminum-cadmium alloy. For example, when the electrodes 110 and 120 are positive electrodes, the current collector used for the electrodes 110 and 120 may include aluminum, and when the electrodes 110 and 120 are negative electrodes, the current collector used for the electrodes 110 and 120 may include copper.

The current collector may be used in various forms such as a film, a sheet, a foil, a net, a mesh, a porous body, a foam body, and a non-woven fabric body. In addition, the current collector may include a polymer layer and metal layers disposed on both surfaces of the polymer layer, and the metal layers may include at least one selected from the group consisting of copper, stainless steel, aluminum, nickel, titanium, sintered carbon, and an aluminum-cadmium alloy.

Specifically, when the electrodes 110 and 120 are negative electrodes, a compound capable of reversible intercalation and deintercalation of lithium may be used as a negative electrode active material included in the negative electrodes. Specific examples of the negative electrode active material may be a carbonaceous material such as artificial graphite, natural graphite, graphitized carbon fibers, and amorphous carbon; a metallic material alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic material and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

In addition, specifically, when the electrodes 110 and 120 are positive electrodes, the positive electrode active material included therein is not particularly limited, and for example, the positive electrode active material may be a commonly used positive electrode active material. Specifically, the positive electrode active material may include a layered compound, such as lithium cobalt oxide (LiCoO₂) or lithium nickel oxide (LiNiO₂), or a compound substituted with one or more transition metals; lithium iron oxides such as LiFe₃O₄; lithium manganese oxides such as Li_{1+c1}Mn_{2-c1}O₄ (0≤c1≤0.33), LiMnO₃, LiMn₂O₃, and LiMnO₂; lithium copper oxide (Li₂CuO₂) ; vanadium oxides such as LiV₃O₈, V₂O₅, and Cu₂V₂O₇; nickel (Ni)-site type lithium nickel oxide expressed by a chemical formula of LiNi_{1-c2}M_{c2}O₂ (where M is at least one selected from the group consisting of cobalt (Co), manganese (Mn), aluminum (Al), copper (Cu), iron (Fe), magnesium (Mg), boron (B), and gallium (Ga), and c2 satisfies 0.01≤c2≤0.3); lithium manganese composite oxide expressed by a chemical formula of LiMn_{2-c3}M_{c3}O₂ (where M is at least one selected from the group consisting of Co, Ni, Fe, chromium (Cr), zinc (Zn), and tantalum (Ta), and c3 satisfies 0.01≤c3≤0.1) or Li₂Mn₃MO₈ (where M is at least one selected from the group consisting of Fe, Co, Ni, Cu, and Zn); and LiMn₂O₄ having a part of Li being substituted with alkaline earth metal ions, but the positive electrode active material is not limited thereto. The positive electrode may be a Li-metal positive electrode.

The binder included in the electrodes may be any one binder polymer or a mixture of two or more thereof selected from the group consisting of a poly vinylidenefluoride polymer, polyvinyl alcohol, styrene butadiene rubber, polyethylene oxide, carboxyl methyl cellulose, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, polyethylene-co-vinyl acetate, polyarylate, and a low molecular compound having a molecular weight of 10,000 g/mol or less.

The conductive agent included in the electrodes is not particularly limited as long as it has conductivity without causing adverse chemical changes in the battery, and, conductive materials, for example, graphite such as natural graphite and artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives, may be used.

Examples of the thickener included in the electrodes may include carboxymethylcellulose (CMC).

As illustrated in FIGS. 1 and 2, the electrode assembly 100 includes a separator 130. The separator is alternately laminated with the electrodes.

As illustrated in FIG. 1, the separator 130 may be bent or folded in a zigzag shape to surround any one end portion of the electrodes 110 and 120. For example, as illustrated in FIG. 1, when the first electrode 110 and the second electrode 120 are alternately laminated, the separator 130 may be bent to surround one end portion 110a of the first electrode 110, and may be bent again to surround one end portion of the second electrode 120 on the reverse side from the one end portion 110a of the first electrode 110. As such bending is repeated, the separator 130 may be bent or folded in a zigzag shape. The electrode assembly 100 may include one separator 130.

The electrode assembly 100 may be a zigzag stack-type electrode assembly in which a basic unit, in which the first electrode 110, the separator 130, the second electrode 120, and the separator 130 are sequentially laminated by bending or folding the separator 130 in a zigzag shape, is laminated in one or more, specifically two or more.

As illustrated in FIG. 3, the separator 130 includes a porous substrate 131 and ceramic coating layers 132a and 132b disposed on both surfaces of the porous substrate.

The porous substrate 131 is not particularly limited as long as it is commonly used as a separator for a secondary battery. Specifically, it is preferable that the porous substrate 131 has excellent moisture-retention ability for an electrolyte as well as low resistance to ion migration in the electrolyte. More specifically, the porous substrate 131 may include at least one selected from the group consisting of a polyolefin-based resin such as polyethylene, polypropylene, polybutylene, or polypentene; a fluorine-based resin such as polyvinylidene fluoride or polytetrafluoroethylene; a polyester-based resin such as polyethylene terephthalate or polybutylene terephthalate; a polyacrylonitrile resin; and a cellulose-based resin, and may be a porous film or a non-woven fabric including any one or two or more copolymers or mixtures thereof, or a laminated structure of two or more layers thereof. The porous substrate 131 may be a porous film or a non-woven fabric including the polyolefin-based resin, or a laminated structure of two or more layers thereof.

The size and porosity of pores present in the porous substrate 131 are not particularly limited. Specifically, the porous substrate 131 may be a porous substrate including pores having an average pore diameter of 0.01-1 µm, specifically, 20-60 nm, in a porosity of 10-90 vol%, specifically, 30-60 vol%, and in this case, it is preferable in that the mechanical strength of the porous substrate 131 may be improved, and at the same time, the ionic materials may more smoothly migrate between the positive electrode and the negative electrode. The average pore diameter and porosity may be measured by means of analysis using a focused ion beam (FIB), gas adsorption, or mercury intrusion porosimetry.

The thickness of the porous substrate 131 is not particularly limited, but may be specifically 1-100 µm, specifically 2-15 µm, in consideration of appropriate mechanical strength as a separator and the ease of migration of the ionic materials.

The ceramic coating layers 132a and 132b are disposed on both surfaces of the porous substrate 131.

The ceramic coating layers 132a and 132b include inorganic particles and a binder. More specifically, the ceramic coating layers may be made from only the inorganic particles and the binder.

The inorganic particles may be introduced in order to prevent short-circuiting of the positive electrode and the negative electrode due to thermal shrinkage of the porous substrate at a high temperature, and the inorganic particles may be provided as a kind of spacer capable of maintaining a physical shape of the porous substrate and minimizing the thermal shrinkage.

The inorganic particles may be used without particular limitation as long as they are electrochemically stable within an operating voltage range of the battery (for example, 0V to 5V based on Li/Li+) and do not cause oxidation and/or reduction reactions, that is, electrochemical reactions. The inorganic particles may include: lithium phosphate (Li₃PO₄); lithium titanium phosphate (LiₓTi_{y}(PO₄)₃, 0<x<2, and 0<y<3); lithium aluminum titanium phosphate (LiₓAl_{y}Ti_{z}(PO₄)₃, 0<x<2, 0<y<1, and 0<z<3); (LiAlTiP)ₓO_{y}-based glass (0<x<4 and 0<y<13) such as 14Li₂O-9Al₂O₃-38TiO₂-39P₂O₅; lithium lanthanum titanate (LiₓLa_{y}TiO₃, 0<x<2, and 0<y<3); lithium germanium thiophosphate (LiₓGe_{y}P_{z}S_{w}, 0<x<4, 0<y<1, 0<z<1, and 0<w<5) such as Li_{3.25}Ge_{0.25}P_{0.75}S₄; lithium nitride (LiₓN_{y}, 0<x<4, and 0<y<2) such as Li₃N; SiS₂-based glass (LiₓSi_{y}S_{z}, 0<x<3, 0<y<2, and 0<z<4) such as Li₃PO₄-Li_{2S}-SiS₂; P₂S₅-based glass (LiₓP_{y}S_{z}, 0<x<3, 0<y<3, and 0<z<7) such as LiI-Li₂S-P₂S₅; Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb(Zr,Ti)O₃(PZT); Pb₁₋ₓLaₓZr_{1-y}TiyO₃(PLZT); PB(Mg₃Nb_{2/3})O₃-PbTiO₃ (PMN-PT); hafnia (HfO₂); or a mixture of two or more thereof. Specifically, the inorganic particles may include Al₂O₃; AlOOH; BaTiO₃; BaSO₄; MgO; CaO; CeO₂; NiO; SiO₂; SnO₂; SrTiO₃; TiO₂; Y₂O₃; ZnO; ZrO₂; Pb (Zr, Ti) O₃ (PZT) ; Pb₁₋ₓLaₓZr_{1-y}TiyO₃(PLZT); PB(Mg₃Nb_{2/3})O₃-PbTiO₃ (PMN-PT) ; hafnia (HfO₂); or a mixture of two or more thereof, and more specifically, may include at least one selected from the group consisting of Al₂O₃, AlOOH, BaTiO₃, BaSO₄, and MgO.

The average particle diameter (D₅₀) of the inorganic particles may be 0.1-1 µm, specifically 0.2-0.7 µm.

The inorganic particles are included in the ceramic coating layers 132a and 132b in an amount of from 92 wt% to less than 100 wt%. The content of the inorganic particles should be considered in relation to the content of the binder, which will be described later, and may be controlled in terms of preventing an increase in resistance due to an excess of the binder while preventing the deterioration of thermal stability due to thermal shrinkage of the porous substrate. Specifically, the inorganic particles may be included in the ceramic coating layers in an amount of 93-98 wt%.

The binder may be included in the ceramic coating layers 132a and 132b for binding of inorganic particles and binding of the separator and the electrodes.

In this case, the binder is included in the ceramic coating layers in an amount of more than 0 wt% and less than or equal 8 wt%. When the binder is included in an amount of more than 8 wt%, the binder may be excessively included in the ceramic coating layers, resulting in an increase in resistance of the secondary battery. Meanwhile, since the binder is included in the above-described range, the cell stiffness of the secondary battery may decrease due to the decrease in the adhesive strength between the electrodes and the separator, but as described later, the present invention uses a combination of the separator and the gel polymer electrolyte having the above-described characteristics, and thus it is possible to simultaneously achieve improvement of cell stiffness and mechanical durability as well as improvement of resistance of the secondary battery.

Specifically, the binder may be included in the ceramic coating layers in an amount of 2-7 wt%, and when the binder is included within the range, it is possible to prevent an increase in resistance of the secondary battery while securing binding force of the inorganic particles as much as possible.

The binder may be a hydrophobic binder including at least one hydrophobic functional group such as a fluorine group (-F), an acrylate group (CH₂=CHCOO-), a methacrylate group (CH2=C(CH₃)COO-), a vinyl acetate group (-CH₂=CHOCO-), or a nitrile group (-C≡N) in the molecule; or a hydrophilic binder including at least one polar group such as a hydroxyl group (-OH), a carboxyl group (-COOH), an maleic anhydride group (-COOOC-), a sulfonic acid group (-SO₃H), or an isocyanate group (-NCO-), and any one or a mixture of two or more thereof may be used. More specifically, the hydrophobic binder may be polyvinylidene fluoride, polyvinylidene fluoride-co-hexafluoropropylene, polyvinylidene fluoride-co-trichloroethylene, polymethylmethacrylate, polyacrylonitrile, polyvinyl acetate, polyethylene-co-vinylacetate, polyimide, polyethylene oxide, or the like. In addition, the hydrophilic binder may be cyanoethylpullulan, cyanoethylpolyvinyl alcohol, cyanoethylcellulose, cyanoethylsucrose, carboxyl methyl cellulose, polyvinyl alcohol, polyacrylic acid, polymaleic anhydride, polyvinylpyrrolidone, or the like.

Specifically, the binder may be an acrylic binder. The acrylic binder may be well dispersed with the inorganic particles when the ceramic coating layers are prepared, thereby preventing the ceramic coating layers from being separated into a binder in an upper layer and inorganic particles in a lower layer. This layer separation consequently hinders the migration of ions in the negative electrode and the positive electrode, resulting in an increase in resistance, and thus when the acrylic binder is used as the binder, the desired resistance reduction effect of the present invention may be exhibited to a much superior level.

The acrylic binder may include at least one selected from the group consisting of a copolymer of ethylhexyl acrylate and methyl methacrylate; polymethylmethacrylate; polyethylhexyl acrylate; polybutylacrylate; polyacrylonitrile; and a copolymer of butyl acrylate and methyl methacrylate.

The ceramic coating layers may include the inorganic particles and the binder at a weight ratio of 92:8 or more and less than 100:0, specifically, 93:7 to 98:2.

The thicknesses of the ceramic coating layers 132a and 132b may be 0.1-10 µm, specifically 0.5-5 µm, and more specifically 1.0-2.5 µm. Since the ceramic coating layers 132a and 132b include the above-described small amount of the binder, it is possible to implement a thin separator, thereby further improving the energy density of the secondary battery and achieving low resistance. The thicknesses of the ceramic coating layers may mean the thickness of one ceramic coating layer formed on one surface of the porous substrate.

The ceramic coating layers 132a and 132b may be prepared by applying a composition for forming a ceramic coating layer, in which inorganic particles and a binder are dispersed in a solvent, to the porous substrate and drying the substrate. The application method of the composition for forming the ceramic coating layer is not particularly limited, and a dip coating, a die coating, a roll coating, a comma coating, a gravure coating, or the like, and specifically, a gravure coating may be used. After applying the composition for forming the ceramic coating layer, natural drying, reversible drying, hot air drying, or the like may be used as a drying method.

The thickness of the separator 130 may be 1-20 µm, specifically, 5-14 µm, and according to the present invention, because the binder content in the ceramic coating layer is reduced, it is possible to implement a thin separator, thereby further improving the energy density of the secondary battery and achieving low resistance.

In the electrode assembly 100, the adhesive composition 140 is applied to the surface of at least one of the electrodes 110 and 120 and the separator 130, in this the electrodes 110 and 120 and the separator 130 adhere to each other.

The adhesive composition 140 includes an adhesive and a polymerization initiator.

The adhesive included in the adhesive composition 140 may be introduced for adhesion between the electrodes 110 and 120 and the separator 130. Specifically, the adhesive may be introduced to fix the alignment positions of the electrodes and the separator in the process of laminating, assembling, and stacking the electrodes and the separator during the manufacturing process of the secondary battery. As described above, since the separator 130 according to the present invention has a reduced binder content and may not have sufficient adhesive strength between the electrode and the separator when manufacturing the secondary battery, the adhesive composition 140 may compensate for this problem to easily bond the electrodes and the separator, and prevent the separator from being pushed out during the preparation process of the electrode assembly, thereby improving the efficiency of the process and quality.

The adhesive may be an acrylate-based adhesive. By using the acrylate-based adhesive, the adhesive as described above may be easily dissolved and removed.

Specifically, the acrylate-based adhesive may include a copolymer including a repeating unit derived from at least one monomer selected from the group consisting of methyl methacrylate (MMA), 2-ethylhexyl acrylate (2-EHA), and 2-hydroxyethyl acrylate (2-HEA).

The weight average molecular weight (Mw) of the copolymer may be 120,000-140,000 g/mol. The molecular weight of the copolymer may be measured using a conventional method known in the art. For example, the measurement of the molecular weight may be performed using: a quantitative endgroup analysis method for obtaining a molecular weight by a quantitative analysis of functional groups at the ends of molecular chains; a colligative property utilization method utilizing physical properties such as osmotic pressure, vapor pressure lowering, boiling point elevation, freezing point depression (membrane osmotic method, vapor pressure osmotic pressure method, etc.); a light scattering method using light scattering; an ultracentrifugation method in which the molecular weight is measured by centrifuging a polymer solution and then analyzing a sedimentation rate or concentration distribution; a viscosity method using the viscosity of a polymer solution; a gel permeation chromatography (GPC) using high performance liquid chromatography (HPLC), etc.

The adhesive may be included in the adhesive composition in an amount of 90-99 wt%.

The polymerization initiator is included in the adhesive composition in order to cure the gel polymer electrolyte composition which will be described later. Specifically, the polymerization initiator may be used in order to polymerize an oligomer compound contained in the gel polymer electrolyte composition to form a bonded polymer network in a three-dimensional structure.

Generally, the polymerization initiator used for curing the gel polymer electrolyte composition or polymerizing the oligomer compound is included together in the gel polymer electrolyte composition and used, and the polymerization initiator may allow the oligomer compound to be polymerized while being decomposed in the presence of heat or light to form radicals. However, the polymerization initiator may generate radicals without heat or light, and when the oligomer compound and the polymerization initiator are included together in the gel polymer electrolyte composition, there is a limitation in that the oligomer compound is polymerized before the injection of the gel polymer electrolyte composition, and thus pre-gelation is performed. Since this inhibits sufficient impregnation of the electrode assembly, there are limitations in that the resistance of the finally manufactured battery increases and the life performance is deteriorated.

In order to prevent such limitations, according to the present invention, the polymerization initiator used for curing the gel polymer electrolyte composition is included in the adhesive composition rather than the gel polymer electrolyte composition. Accordingly, the pre-gelation before the injection of the gel polymer electrolyte composition can be prevented, and thus the electrode assembly can be sufficiently impregnated with the gel polymer electrolyte composition, so that a secondary battery can be implemented, in which the limitation of increasing resistance is prevented.

The polymerization initiator may be a photopolymerization initiator or a thermal polymerization initiator according to a polymerization method.

Specifically, as a representative example, the photopolymerization initiator may include at least one compound selected from the group consisting of 2-hydroxy-2-methylpropiophenone (HMPP), 1-hydroxy-cyclohexylphenyl-ketone, benzophenone, 2-hydroxy-1-[4-(2-hydroxyethoxy)phenyl]-2-methyl-1-propanone, oxy-phenylacetic acid 2-[2-oxo-2-phenyl-acetoxy-ethoxy]-ethyl ester, oxy-phenyl-acetic 2-[2-hydroxyethoxy]-ethyl ester, alpha-dimethoxy-alpha-phenylacetophenone, 2-benzyl-2-(dimethylamino)-1-[4-(4-morpholinyl)phenyl]-1-butanone, 2-methyl-1-[4-(methylthio)phenyl]-2-(4-morpholinyl)-1-propanone, diphenyl(2,4,6-trimethylbenzoyl)-phosphine oxide, bis(2,4,6-trimethylbenzoyl)-phenylphosphine oxide, bis(eta 5-2,4-cyclopentadiene-1-yl), bis[2,6-difluoro-3-(1H-pyrrol-1-yl) phenyl]titanium, 4-isobutylphenyl-4'-methylphenyl iodonium, hexafluorophosphate, and methyl benzoylformate.

Also, as a representative example, the thermal polymerization initiator may include at least one compound selected from the group consisting of benzoyl peroxide, acetyl peroxide, dilauryl peroxide, di-tert-butyl peroxide, t-butyl peroxy-2-ethyl-hexanoate, cumyl hydroperoxide, hydrogen peroxide, 2,2'-azobis(2-cyanobutane), 2,2'-azobis(methylbutyronitrile), 2,2'-azobis(iso-butyronitrile) (AIBN), and 2,2'-azobisdimethyl-valeronitrile (AMVN).

The polymerization initiator forms a radical by being dissociated by heat at 30 °C to 100 °C in the secondary battery or by being dissociated by light, such as ultraviolet (UV), at room temperature (5 °C to 30 °C), and forms cross-linking by free radical polymerization so that oligomers may be polymerized.

The polymerization initiator may be included in the adhesive composition in an amount of 1-10 wt%. When the polymerization initiator is within the above range, the polymerization of the oligomer compound may be sufficiently performed, and at the same time, the deterioration of adhesive strength due to a decrease in adhesive content may be prevented.

The adhesive composition may be used to prepare the electrode assembly by bonding the electrodes and the separator, and after the electrode assembly is accommodated in the battery case and the gel polymer electrolyte composition is injected into the battery case, the adhesive composition may be dissolved in an organic solvent contained in the gel polymer electrolyte composition. Since the adhesive composition according to the present invention is dissolved and removed after being used to prepare the electrode assembly, it is possible to easily bond the electrodes and the separator without increasing the amount of binder in the separator, and it is also possible to further improve the energy density of the secondary battery by preventing an increase in the thickness of the separator due to the increase in the amount of the binder.

The adhesive composition may be applied in the form of a plurality of patterns spaced apart from each other. Specifically, the adhesive composition may be applied to the surface of at least one among the electrodes and the separator in the form of a plurality of patterns spaced apart from each other. Specifically, the adhesive composition may be applied to the surface of at least one among the electrodes and the separator in the form of a plurality of dots spaced apart from each other.

The adhesive is removed by the injection of the gel polymer electrolyte composition, and thus traces of adhesive applied may remain on the surface of at least one of the electrodes 110 and 120 and the separator 130. Specifically, when the gel polymer electrolyte composition is injected into the battery case in which the electrode assembly is accommodated, the adhesive is dissolved and removed by an organic solvent in the gel polymer electrolyte composition, thereby leaving traces of adhesive applied.

An area of the adhesive composition applied may be 0% to 1% (exclusive of 0), for example, 0.0001% to 0.05%, with respect to an area of the surface on which the separator and the electrodes are in contact with each other. According to the above range, it is preferable that the electrodes and the separator may be bonded with sufficient adhesive strength, and at the same time, the problem, in which the adhesive is excessively applied and not dissolved in the solvent and remains to increase resistance, may be prevented.

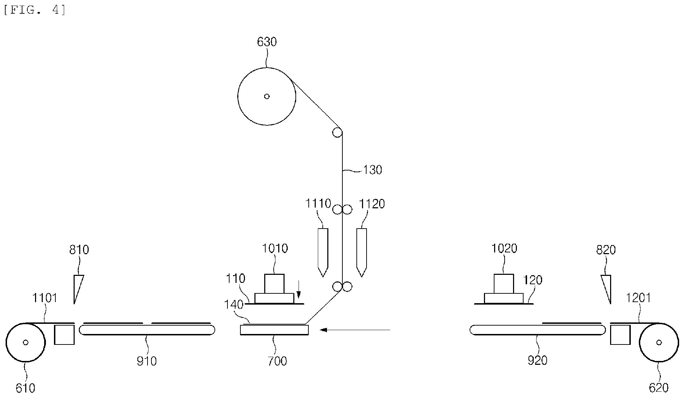

Hereinafter, an exemplary method for preparing the electrode assembly will be described with reference to FIGS. 4 to 7.

Specifically, referring to FIGS. 4 to 7, the electrodes 110 and 120 may include the first electrode 110 and the second electrode 120, and the electrode assembly 100 may be prepared by a method including steps (a) to (d) below:
(a) applying the adhesive composition 140 to at least a portion of the separator 130 and the first electrode 110;
(b) bonding the separator 130 and the first electrode 110 through the applied adhesive composition 140;
(c) folding one side of the separator 130 to cover the first electrode 110;
(d) applying the adhesive composition 140 to at least a portion of the separator 130 and the second electrode 120;
(e) bonding the separator 130 and the second electrode 120 through the applied adhesive composition 140; and
(d) folding the other side of the separator 130 to cover the second electrode 120.

Referring to FIG. 4, the adhesive composition 140 is applied to at least a portion of the separation layer 130 and the first electrode 110. The application of the adhesive composition 140 may be carried out by applying the adhesive composition 140 to at least a portion of the separator 130 and the first electrode 110 through a first nozzle 1110. Although FIG. 4 illustrates that the adhesive composition 140 is applied to the separator 130, the present invention is not limited thereto, and the adhesive composition 140 may be applied to at least a portion of the separator 130, the first electrode 110, or both the separator 130 and the first electrode 110.

As illustrated in FIG. 4, specifically, the separator 130 may be unwound from a separator reel 630 and loaded on the upper surface of a table 700.

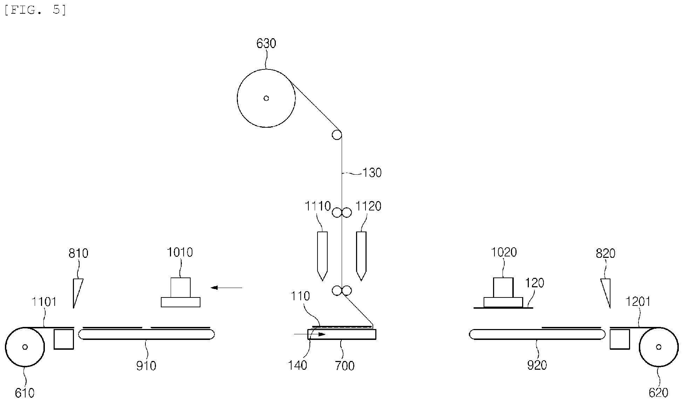

Referring to FIG. 5, the applied adhesive composition 140 bonds the separator 130 and the first electrode 110.

As illustrated in FIG. 5, the first electrode 110 may be formed by cutting a first electrode sheet 1101 unwound from a first electrode reel 610 by a first cutter 810. In this case, when a first transfer device 910 transfers the first electrode 110, a first header 1010 may suck the first electrode. Thereafter, the first electrode 110 may be loaded or disposed on the separator 130 according to the movement of the first header 1010 and/or the table 700.

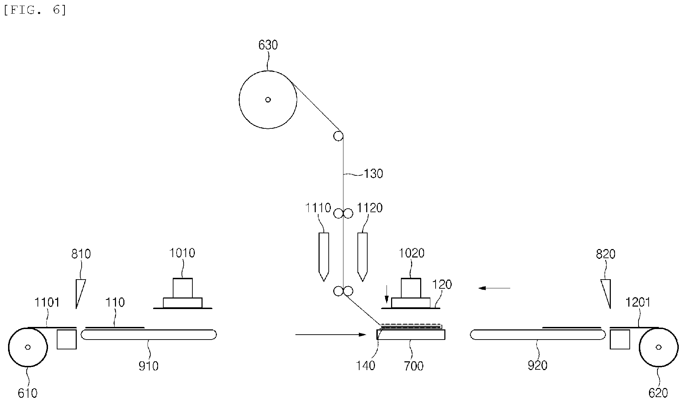

Referring to FIG. 6, one side of the separator 130 may be folded to cover the first electrode 110, and the adhesive composition 140 may be applied to at least a portion of the separator 130 and the second electrode 120.

After the first electrode 110 is bonded onto the separator 130, one side of the separator 130 is folded to cover the first electrode 110. For example, the folding of the separator 130 may be performed by lateral movement of the table 700.

Meanwhile, the adhesive composition 140 is applied to at least a portion of the separator 130 and the second electrode 120. The application of the adhesive composition 140 may be carried out by applying the adhesive composition 140 to at least a portion of the separator 130 and the second electrode 120 through a second nozzle 1120. Although FIG. 6 illustrates that the adhesive composition 140 is applied to the separator 130, the present invention is not limited thereto, and the adhesive composition 140 may be applied to at least a portion of the separator 130, the second electrode 120, or both the separator 130 and the second electrode 120.

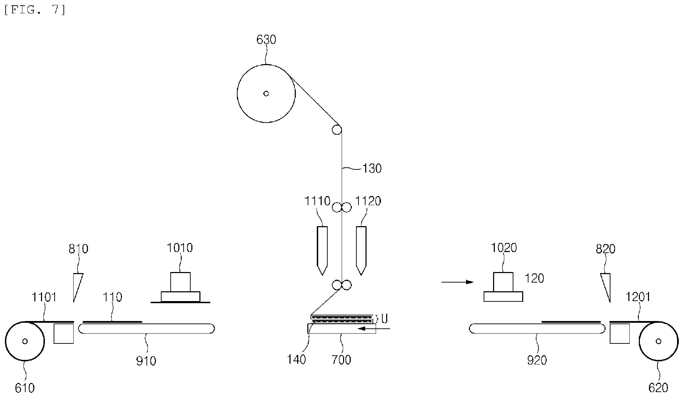

Referring to FIG. 7, the applied adhesive composition 140 bonds the separator 130 and the second electrode 120, and the other side of the separator 130 is folded to cover the second electrode 120.

The second electrode 120 is bonded to the reverse surface of the separator 130 from the surface on which the separator 130 and the first electrode 110 are in contact with each other.

As illustrated in FIG. 7, the second electrode 120 may be formed by cutting a first electrode sheet 1201 unwound from a second electrode reel 620 by a second cutter 820. In this case, when a second transfer device 920 transfers the second electrode 120, a second header 1020 may suck the second electrode. Thereafter, the second electrode may be loaded or bonded on the separator 130 according to the movement of the second header 1020 and/or the table 700.

Referring to FIG. 7, after the second electrode 120 is bonded, the other side of the separator 130 is folded to cover the second electrode 120. Accordingly, it is possible to prepare the electrode assembly having a structure in which the first electrode and the second electrode are alternately laminated, a separator is interposed between the first electrode and the second electrode, and the separator is folded in a zigzag shape. Thereafter, repeating the above-described process can implement the electrode assembly in which a plurality of first electrodes and second electrodes are alternately laminated.

In this case, in the case of the electrode assembly including the separator bent in a zigzag shape as described above, the separator and/or the electrode may be pushed out due to the bending or folding of the separator in the preparation process, and this may lead to poor quality and reduced process efficiency. However, according to the present invention, the electrode and/or the separator may be prevented from being pushed out at a significant level as the adhesive is applied for the bonding of the electrodes and the separator, and the secondary battery having improved quality may be manufactured. The application of the adhesive is particularly preferable in terms of supplementing the adhesive strength of the separator of the present invention in which the binder is contained in a low amount.

### (2) Step for Accommodating Electrode Assembly

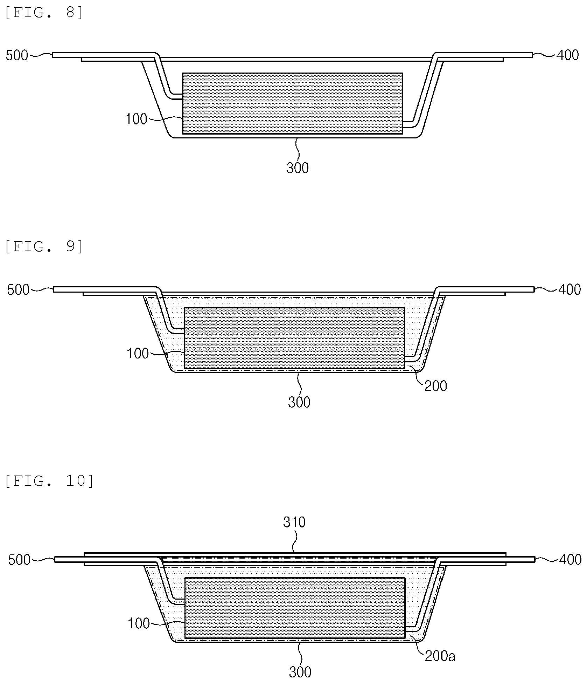

Referring to FIG. 8, the electrode assembly 100 is accommodated in the battery case 300.

For convenience of description, the electrode assembly is briefly illustrated in FIG. 8.

The battery case 300 may be provided in order to accommodate the electrode assembly 100 and the gel polymer electrolyte 200.

The battery case 300 may be a case in the form of a pouch made from a material having flexibility, and may be, for example, an aluminum pouch battery case.

When the battery case 300 is the aluminum pouch battery case, the battery case 300 may be formed of, for example, a pouch film in which a polypropylene layer (PP layer), an aluminum layer, and a polyethylene terephthalate layer (PET layer) are sequentially laminated from the inside.

The battery case 300 may include a cup, which is an accommodation space for accommodating the electrode assembly.

The battery case 300 may include a cover 310, and after accommodating the electrode assembly, curing and gelling the gel polymer electrolyte composition, the battery case 300 may be sealed with the cover to manufacture a sealed secondary battery.

As illustrated in FIG. 8, a plurality of electrode tabs 400 and 500 may be connected to the electrode assembly. Specifically, the plurality of electrode tabs 400 and 500 may be connected to the electrodes 110 and 120 of the electrode assembly 100, and more specifically, may be connected to the first electrode 110 and the second electrode 120, respectively, and may protrude to the outside of the battery case 300 to be a path for allowing electrons to move. In addition, although FIG. 8 illustrates that the two electrode tabs 400 and 500 are disposed in different directions with respect to the electrode assembly 100, the present invention is not limited thereto, and the two electrode tabs 400 and 500 may protrude side by side in the same direction from one side of the electrode assembly 100. The plurality of electrode tabs 400 and 500 may be a positive electrode tab and a negative electrode tab, and may be connected to the positive electrode and the negative electrode, respectively.

### (3) Step for Injecting Gel Polymer Electrolyte Composition and Impregnating Electrode Assembly

Referring to FIG. 9, the gel polymer electrolyte composition 200 is injected into the battery case 300 to impregnate the electrode assembly 100. The electrode assembly 100 may be impregnated with the gel polymer electrolyte composition 200 and the gel polymer electrolyte composition 200 may be cured and disposed inside and outside the electrode assembly.

Since the gel polymer electrolyte 200a cured by the gel polymer electrolyte composition 200 has no flowability and the gelled electrolyte is used, cell stiffness of the secondary battery may be improved. In particular, the present invention can implement a secondary battery having improved cell stiffness by using the gel polymer electrolyte together with the separator as described above, thereby reducing resistance. On the other hand, when the separator and the liquid electrolyte as described above are used, since the cell stiffness is excessively decreased, processability may be deteriorated and product defects may occur due to cell sagging, separator pushed out, etc., and safety deteriorates, and there is a possibility of explosion of the secondary battery.

The gel polymer electrolyte composition 200 includes a lithium salt, an organic solvent, and an oligomer compound. In this case, the gel polymer electrolyte composition does not include a polymerization initiator.

The gel polymer electrolyte composition 200 does not include a polymerization initiator which provides radicals required for the polymerization of the oligomer compound. Accordingly, the possibility of the pre-gelation of the gel polymer electrolyte composition may be blocked in the storage process before the injection in the battery case. As described above, according to the present invention, after the gel polymer electrolyte composition is injected into the battery case, the polymerization initiator present in the electrode assembly is dissolved, and then, may be utilized as a source for providing radicals.

The lithium salt may be used in order to provide lithium ions to the secondary battery.

The lithium salt may be used without particular limitation as long as it is a compound capable of providing lithium ions used in the secondary battery. Specifically, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used as the lithium salt. It is preferable to use the lithium salt in a concentration range of 0.1 M to 5.0 M, preferably, 0.1 M to 3.0 M. When the concentration of the lithium salt is included within the above range, the electrolyte may have suitable conductivity and viscosity, thereby exhibiting excellent performance, and lithium ions may effectively migrate.

The oligomer compound may include at least one selected from the group consisting of polyether-based oligomers, polycarbonate-based oligomers, acrylate-based oligomers, polysiloxane-based oligomers, phosphazene-based oligomers, polyethylene-based oligomers, urethane-based oligomers, epoxy-based oligomers, fluorine-based oligomers, polyethylene oxide, polyester sulfide, polyvinyl alcohol, and polyvinylidene fluoride, and in particular, at least one selected from fluorine-based oligomers, polycarbonate-based oligomers, and polysiloxane-based oligomers.

For example, the fluorine-based oligomers may specifically include a fluorine-based monomer-derived unit. The fluorine-based oligomers have the advantage that the fluorine-based functional group contained therein inhibits the generation of oxygen radicals caused by the degradation of the cathode active material, thereby further improving battery stability and having excellent flame retardancy. More specifically, the fluorine-based oligomers may include at least one selected from among a tetrafluoroethylene (TFE)-vinyl acetate copolymer, an (allyl 1,1,2,2-tetrafluoroethyl ether)-(2,2,2-trifluoroethyl acrylate) copolymer, a tetrafluoroethylene-(2-vinyl-1,3-dioxolane) copolymer, and a tetrafluoroethylene-vinyl methacrylate copolymer.

In addition, the polycarbonate-based oligomers have the advantage of having affinity to a positive electrode, having a structure similar to an organic electrolyte solution, and having excellent ion conductivity or excellent degree of ionic dissociation.

In addition, the polysiloxane-based oligomers may function as a scavenger of gas (HF, etc.) generated by the side reaction of the electrolyte solution, thereby having an effect of improving high-temperature storage characteristics.

The oligomer compound may have a weight-average molecular weight of 1,000-50,000 g/mol, specifically, 4,500-30,000 g/mol.

The oligomer compound may be included in the gel polymer electrolyte composition in an amount of 1-20 wt%, specifically 3-10 wt%, and within the above range, the cell stiffness improvement effect of the secondary battery may be exhibited excellent, and the ion conductivity and the mobility of lithium ions of the gel polymer electrolyte may be exhibited excellent.

The organic solvent may be used in order to dissolve or disperse lithium salts and second oligomer compounds.

The organic solvent is a solvent commonly used in a secondary battery, and for example, ethers, esters (acetates and propionates), amides, linear carbonates or cyclic carbonates, or nitriles (acetonitriles, SN, *etc.*) may be used alone or in mixture of two or more thereof.

Among them, a carbonate-based solvent containing a cyclic carbonate, a linear carbonate, or a carbonate compound, as a mixture thereof, may be typically used.

Specific examples of the cyclic carbonate compound may be a single compound selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, and halides thereof, or a mixture of two or more thereof. Also, as specific examples of the linear carbonate compound, a compound selected from the group consisting of dimethyl carbonate (DMC), diethyl carbonate (DEC), dipropyl carbonate (DPC), ethylmethyl carbonate (EMC), methylpropyl carbonate (MPC), and ethylpropyl carbonate (EPC), or a mixture of two or more thereof may be typically used, but the present invention is not limited thereto.

In particular, since propylene carbonate and ethylene carbonate, as cyclic carbonates among the carbonate-based solvents, are highly viscous organic solvents and have high dielectric constants, the propylene carbonate and ethylene carbonate may well dissociate the lithium salt in the electrolyte solution, and, thus, the propylene carbonate and ethylene carbonate may be preferably used. Since an electrolyte solution having high electrical conductivity may be prepared when the above cyclic carbonate is mixed with low viscosity, low dielectric constant linear carbonate, such as ethylmethyl carbonate, diethyl carbonate, or dimethyl carbonate, in an appropriate ratio, the propylene carbonate and ethylene carbonate may be more preferably used.

Furthermore, as the ester among the organic solvents, a single compound selected from the group consisting of methyl acetate, ethyl acetate, propyl acetate, methyl propionate, ethyl propionate, γ-butyrolactone, γ-valerolactone, γ-caprolactone, α-valerolactone, and ε-caprolactone, or a mixture of two or more thereof may be used, but the present invention is not limited thereto.

The adhesive and polymerization initiator of the adhesive composition applied into the electrode assembly is dissolved by the injection of the gel polymer electrolyte composition, specifically, may be dissolved by an organic solvent in the gel polymer electrolyte composition.

The dissolution of the adhesive and the polymerization initiator may be performed more smoothly in the activation and the pressurization of the degassing process generally involved in the manufacturing process of the secondary battery. The activation is a process of forming the solid electrolyte interface (SEI) layer on the electrode plate surface of the electrode assembly through a charging process in the initial secondary battery and allowing the electrode assembly to be charged, and may be a process for enabling the secondary battery to supply power through the activation, for example, may be performed at 45 °C or higher, specifically, 50-70 °C. The degassing process is a process of discharging the gas generated in the activation process, etc. to the outside, and may be accompanied by a process of pressing the secondary battery by a jig or the like. The adhesive may be more smoothly dissolved or removed by such an increase in temperature, pressurization, or the like.

The gel polymer electrolyte composition 200 is injected into the battery case 300, and the electrode assembly 100 is impregnated by the gel polymer electrolyte composition 200. The impregnation may be performed at 10 °C to 30 °C for 0.5 hours to 72 hours, and preferably at 15 °C to 30 °C for 40 hours to 60 hours.

### (4) Step for Curing Gel Polymer Electrolyte Composition

Thereafter, as illustrated in FIG. 10, the gel polymer electrolyte composition 200 is cured. Specifically, the gel polymer electrolyte composition 200 is cured to form a gel polymer electrolyte 200a.

When the gel polymer electrolyte composition is cured, the oligomer compound may be cross-linked and cured to form an electrolyte solidified in a gel form (gel polymer electrolyte) . Specifically, the gel polymer electrolyte 200 may include the cured product of the oligomer compound and a lithium salt.

The gel polymer electrolyte composition is cured by the dissolved polymerization initiator. That is, the polymerization initiator present in the adhesive composition 140 applied is dissolved by the gel polymer electrolyte composition 200, and may function as a radical-providing source for curing the gel polymer composition and polymerizing the oligomer compound. Thereafter, the gel polymer electrolyte composition may form a gel polymer electrolyte by the curing.

Such prevention of the pre-gelation of the gel polymer electrolyte composition enables the electrode assembly to be sufficiently impregnated and to secure ion conductivity, and enables implementation of a secondary battery having improved resistance reduction and life performance effects.

In this case, the curing of the gel polymer electrolyte composition may be performed at 50-100 °C for 0.5-48 hours, and preferably, may be performed at 60-80 °C for 0.5-24 hours.

Meanwhile, the curing may be performed while the battery case 300 is sealed. For example, the battery case 300 in which the electrode assembly 100 and the gel polymer electrolyte composition 200 are accommodated may be sealed by a cover or the like, and then the gel polymer electrolyte composition may be thermally cured by heat treatment.

After the curing or the sealing and curing, activation, degassing, resealing processes, and the like known in the art may be further performed.

Hereinafter, examples of the present invention will be described in detail so that a person with ordinary skill in the art to which the present disclosure pertains can easily carry out the present invention. The present invention may, however, be embodied in many different forms within the scope of the appended claims and should not be construed as being limited to the examples set forth herein.

### Examples and Comparative Example

### Example 1

### 1. Preparation of Separator

A composition for forming a ceramic coating layer was prepared by adding Al₂O₃ (average particle diameter (D₅₀): 0.5 µm) as inorganic particles and an acrylic binder to water, which is a solvent, at a weight ratio of 96:4. As the acrylic binder, a mixture of the product name TRD 202A from JSR Corporation and the product name AP-0821 from APEC Corporation was used.

The composition for forming a ceramic coating layer was applied to both surfaces of the polyethylene porous substrate (thickness: 9 µm, average pore diameter: 0.05 µm, porosity: 45 vol%) by a gravure coating and dried to form the ceramic coating layer (thickness of one layer: 1.5 µm), thereby preparing a separator (thickness: 12 µm = 1.5 µm + 9 µm + 1.5 µm).

### 2. Preparation of Electrode Assembly

The separator reel around which the separator had been wound was unwound, and was loaded on the table. An adhesive composition was applied on the separator by using a first nozzle in a pattern of a plurality of dots spaced apart from each other. An area (5.8875 mm²) of the adhesive composition applied was 0.002366% with respect to an area (24,889 mm²) of the surface on which the separator and the positive electrode are in contact with each other. The adhesive composition was used by mixing an adhesive and azobisisobutyronitrile (AIBN) as a polymerization initiator in a weight ratio of 99:1. The adhesive was an acrylate-based adhesive which is a copolymer including a repeating unit derived from methyl methacrylate (MMA), 2-ethylhexylacrylate (2-EHA), and 2-hydroxyethyl acrylate (2-HEA) in a weight ratio of 40:30:30. Thereafter, a positive electrode sheet was unwound from a first electrode reel, around which the positive electrode sheet had been wound, cut with a first cutter to prepare a positive electrode, and the positive electrode is transferred to a first transfer device to be sucked to a first header. The first header was moved toward the table to bond the positive electrode on the separator.

Thereafter, the table was laterally moved to fold the separator to one side to cover the positive electrode.

Thereafter, the same adhesive used above was applied, using a second nozzle, onto the surface of the separator (the reverse surface from the surface on which the separator and the positive electrode are in contact with each other) in a plurality of dot-shaped patterns spaced apart from each other.

Thereafter, a negative electrode sheet was unwound from a second electrode reel, around which the negative electrode sheet had been wound, cut with a second cutter to prepare a negative electrode, and the negative electrode is transferred to a second transfer device to be sucked to a second header. The second header is moved toward the table to bond the negative electrode to the surface of the separator (the reverse surface from the surface on which the separator and the negative electrode are in contact with each other).

Thereafter, the table was laterally moved again to fold the separator to the other side to cover the negative electrode.

The above process was repeated several times to prepare an electrode assembly in which 18 basic units in which a separator/positive electrode/separator/negative electrode were sequentially laminated were laminated. In this case, the separator was folded in a zigzag shape.

In the case of the positive electrode, a positive electrode slurry was prepared by adding Li[Ni_{0.8}Co_{0.1}Mn_{0.1}]O₂ as a positive electrode active material, PVdF as a binder, and carbon black as a conductive agent in a weight ratio of 97.5:1.5:1.0 to N-methylpyrrolidone (NMP) as a solvent, and then the positive electrode slurry was applied to both surfaces of an aluminum current collector as a positive electrode collector, and dried and rolled to form a positive electrode active material layer.

Also, in the case of the negative electrode, a negative electrode slurry was prepared by adding graphite as a negative electrode active material, styrene-butadiene rubber as a binder, carbon black as a conductive agent, and carboxymethylcellulose (CMC) as a thickener to water as a solvent in a weight ratio of 95.5:2.5:1.0:1.0, and the negative electrode slurry was applied to both surfaces of a copper current collector as a negative electrode collector, and dried and rolled to form a negative electrode active material layer.

### 3. Preparation of Gel Polymer Electrolyte Composition

A gel polymer electrolyte composition was prepared by mixing a polycarbonate (weight average molecular weight Mw: 20,000) as an oligomer, LiPF₆ as a lithium salt, and azobisisobutyronitrile (AIBN) as a polymerization initiator in a solvent.

The solvent is a mixture of ethyl carbonate (EC) and ethyl methyl carbonate (EMC) in a volume ratio of 3:7, the lithium salt is included in the gel polymer electrolyte composition at a concentration of 1.0 M, the oligomer is included in the gel polymer electrolyte composition in an amount of 5 wt%, and the polymerization initiator is included in the gel polymer electrolyte composition in an amount of 0.6 parts by weight based on 100 parts by weight of the oligomer.

In this case, 1 week after being prepared, the gel polymer electrolyte composition was used.

### 4. Manufacture of Secondary Battery

A pouch-type battery case made from an aluminum material was prepared as a battery case, and an electrode assembly was accommodated in an accommodation space of the battery case.

Thereafter, the gel polymer electrolyte composition was injected into the battery case in which the electrode assembly was accommodated. After the injection of the gel polymer electrolyte composition, vacuum sealing was performed.

As the gel polymer electrolyte composition was injected, the adhesive present in the electrode assembly was dissolved and removed by a solvent of the gel polymer electrolyte composition. As described later, the adhesive is removed, and thus traces of the adhesive applied remain on the separator and the electrodes.

Thereafter, the gel polymer electrolyte composition injected into the battery case was cured. The curing was performed by heat treatment at 60 °C for 5 hours.

Thereafter, the battery case was cooled, sealed, and degassed to manufacture a secondary battery. The thickness of the secondary battery was 0.8 cm.

### Comparative Example 1

### 1. Preparation of Separator

The same separator as prepared in Example 1 was used.

### 2. Preparation of Electrode Assembly

The same electrode assembly as prepared in Example 1 was used.

### 3. Preparation of Liquid Electrolyte Composition

A liquid electrolyte composition was prepared by mixing ethylene carbonate (EC) and ethyl methyl carbonate (EMC) in a volume ratio of 30:70 and using the mixture as a solvent, and adding LiPF₆, a lithium salt, to the solvent at a concentration of 1.0 M.

### 4. Manufacture of Secondary Battery

A secondary battery was manufactured in the same manner as in Example 1, except that the above-prepared liquid electrolyte composition was used and a separate curing process was not performed. The thickness of the secondary battery was 0.8 cm.

### Comparative Example 2

### 1. Preparation of Separator

The same separator as prepared in Example 1 was used.

### 2. Preparation of Electrode Assembly

An electrode assembly was prepared in the same manner as in Example 1, except that the polymerization initiator was not included in the adhesive composition.

The same electrode assembly as prepared in Example 1 was used.

### 3. Preparation of Gel Polymer Electrolyte Composition

A gel polymer electrolyte composition was prepared in the same manner as the gel polymer electrolyte composition of Example 1, except that azobisisobutyronitrile (AIBN) as a polymerization initiator was further included by 0.02 wt%.

In this case, 1 week after being prepared, the gel polymer electrolyte composition was used.

### 4. Manufacture of Secondary Battery

A secondary battery was manufactured in the same manner as in Example 1, except that the above-prepared gel polymer electrolyte composition was used. The thickness of the secondary battery was 0.8 cm.

### Comparative Example 3

### 1. Preparation of Separator

A composition for forming a ceramic coating layer was prepared by adding Al₂O₃ (average particle diameter (D₅₀): 0.5 µm) as inorganic particles and PVdF as a binder to acetone, which is a solvent, at a weight ratio of 70:30.

The composition for forming a ceramic coating layer was applied to both surfaces of the polyethylene porous substrate (thickness: 9 µm, average pore diameter: 0.05 µm, porosity: vol%) by a gravure coating and dried to form the ceramic coating layer (thickness of one layer: 3 µm), thereby preparing a separator (thickness: 15 µm = 3 µm + 9 µm + +3 µm) .

### 2. Preparation of Electrode Assembly

A plurality of the above-prepared separators were prepared. In addition, a plurality of those identical to the positive electrode and the negative electrode prepared in Example 1 were prepared.

Prepared was an electrode assembly in which 18 basic units in which a separator/positive electrode/separator/negative electrode were sequentially laminated were laminated. In this case, the two separators in the basic unit are separate separators, and are not folded in a zigzag shape as in Example 1. In addition, a separate adhesive composition was not used for laminating the separator and the positive electrode or the negative electrode.

### 3. Preparation of Liquid Electrolyte Composition

The same liquid electrolyte composition as prepared in Comparative Example 1 was used.

### 4. Manufacture of Secondary Battery

A secondary battery was manufactured in the same manner as in Example 1, except that the above-prepared electrode assembly and liquid electrolyte composition were used and a separate curing process was not performed. The thickness of the secondary battery was 0.8 cm.

### Comparative Example 4

### 1. Preparation of Separator

The same separator as prepared in Comparative Example 3 was used.

### 2. Preparation of Electrode Assembly

The same electrode assembly as prepared in Comparative Example 3 was used

### 3. Preparation of Gel Polymer Electrolyte Composition

The same gel polymer electrolyte composition as prepared in Comparative Example 2 was used.

In this case, 1 week after being prepared, the gel polymer electrolyte composition was used.

### 4. Manufacture of Secondary Battery

A secondary battery was manufactured in the same manner as in Example 1, except that the above-prepared electrode assembly and gel polymer electrolyte composition were used. The thickness of the secondary battery was 0.8 cm.

### Experimental Examples

### 1. Observation of Traces of Adhesive Applied on Surface of Separator

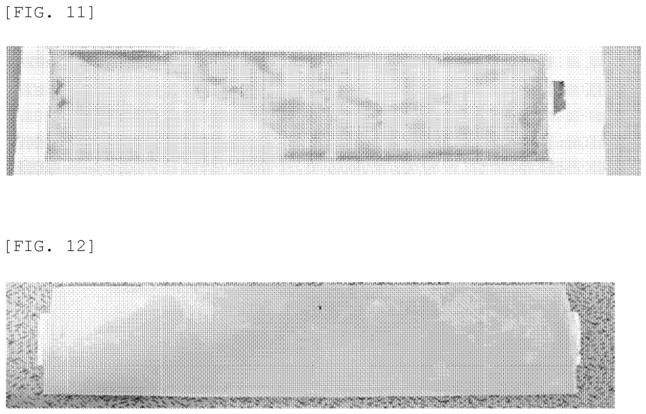

In the secondary batteries of Example 1 and Comparative Example 3, the separator corresponding to the surface in which the electrode and the separator were in contact with each other was cut, and the surface thereof was observed. A photograph of the surface of the separator separated from the secondary battery of Example 1 is shown in FIG. 11, and a photograph of the surface of the separator separated from the secondary battery of Comparative Example 1 is shown in FIG. 12.

As may be seen in FIG. 11, traces of the adhesive applied were observed on the photograph of the surface of the separator of Example 1.

Meanwhile, as may be seen in FIG. 12, since no adhesive was used to prepare the electrode assembly of Comparative Example 3, no traces of the adhesive applied was observed on the surface of the separator of Comparative Example 3.

### 2. Evaluation of Impregnation Completion Time and Degree of Pre-gelation Upon Completion of Impregnation

During the process for manufacturing the secondary battery of Example 1, in the process of injecting the gel polymer electrolyte composition into the battery case and impregnating the electrode assembly with the gel polymer electrolyte composition, the impregnation completion time and the degree of pre-gelation upon completion of the impregnation were evaluated.

The impregnation completion time was evaluated by performing the Potentiostatic EIS evaluation once every 30 minutes immediately after injecting the gel polymer electrolyte composition into the battery case, and vacuum-sealing the battery case, and measuring the time until the Nyquist plot profile was saturated.

Meanwhile, the degree of pre-gelation upon completion of the impregnation was evaluated by calculating an NMR area peak ratio of ethylene carbonate (EC) and acryl group immediately after the injection of the gel polymer electrolyte composition, and an NMR area peak ratio of ethylene carbonate (EC) and acryl group after completion of the impregnation, and calculating the ratio thereof. The evaluation was performed by confirming how much carbon double bond (C=C) of ethylene carbonate is consumed through NMR.$Reaction ratio \left(%\right) = \frac{\frac{{A}_{Acryl}}{{A}_{EC}}}{\frac{{A}_{Acryl . t = 0}}{{A}_{EC , t = 0}}} \times 100 %$

In Equation above, reaction ratio (%) means the degree of pre-gelation upon completion of the impregnation, "A_{Acryl}/A_{EC}" means the NMR area peak ratio of ethylene carbonate (EC) and acryl group after completion of the impregnation, and "A_{Acryl}, ₜ₌₀/A_{EC}, ₜ₌₀" means the NMR area peak ratio of ethylene carbonate (EC) and acryl group immediately after the injection of the gel polymer electrolyte composition.

In the same manner as described above, the impregnation completion time and the degree of pre-gelation upon completion of the impregnation were also evaluated for Comparative Example 2 and Comparative Example 4.

### 3. Resistance Evaluation

In the secondary batteries of Example 1, and Comparative Examples 1 to 4, the resistance value was calculated using the voltage change amount (ΔV) measured when discharging at 2.5 C rate for 10 seconds at 50% of SOC, and the results are shown in Table 1 below.

### 4. Evaluation of Life Performance

The secondary batteries of Example 1, and Comparative Examples 1 to 4 as manufactured above were charged and discharged for 100 cycles at 45 °C under the following conditions to evaluate capacity retention at the 100th cycle.

### * Charging and discharging conditions

Charging: CC/CV mode; 0.33C; 4.2V, 1/20C cut-off
Discharging: CC mode; 0.33C; 2.5V cut-off

As the above experimental conditions, the value obtained by dividing the discharge capacity for the 100th cycle by the discharge capacity for the first cycle was defined as the capacity retention. The results are shown in Table 1 below.

### 5. Evaluation of Cell Stiffness

According to the 3-point bending method, the stress value was measured when 2 mm displacement was applied by applying a force at a speed of 10 mm/minute downwards from the center of each secondary battery. In this case, pre-load was applied with 30gf, the experiment was performed at room temperature, and the stress value was measured by a universal testing machine (UTM). The results are shown in Table 1 below.

### 6. Ignition Temperature Measurement Test

The secondary batteries of Example 1, and Comparative Examples 1 to 4 were fully charged at 100% of SOC, placed in a hot box, and heated at a rate of 0.5 °C/minute to measure a temperature at which ignition starts, and the measured temperature is shown in Table 1.

**[Table 1]**

| | Experimental Example 2 | | Experimental Example 3 | Experimental Example 4 | Experimental Example 5 | Experimental Example 6 |
|---|---|---|---|---|---|---|
| | Wetting completion time (hr) | Polymer conversion rate (%) upon wetting completion | Resistance (Ω) | 100 cycle capacity retention (%) | Cell Stiffness | Ignition temperature (°C) |
| Example 1 | 15 | 3 | 2.11 | 98.5 | 4.57 | 179 |
| Comparative Example 1 | - | - | 2.08 | 99.3 | 3.05 | 167 |
| Comparative Example 2 | 46 | 10 | 2.22 | 98.1 | 4.39 | 178 |
| Comparative Example 3 | - | - | 2.23 | 98.4 | 3.70 | 166 |
| Comparative Example 4 | 63 | 18 | 2.35 | 95.8 | 6.81 | 168 |

Referring to Table 1, it may be confirmed that the secondary battery manufactured according to Example 1 has low resistance, excellent life characteristics, high cell stiffness, and thermal stability.

On the other hand, in the case of Comparative Example 1, the liquid electrolyte composition was used, and thus the cell stiffness is very low, and the thermal stability is significantly deteriorated.

In addition, in the case of Comparative Example 2, the polymerization initiator is included in the gel polymer electrolyte composition rather than the adhesive composition, and the pre-gelation of the gel polymer electrolyte composition is considerably progressed. Since such pre-gelation inhibits sufficient impregnation of the electrode assembly, the resistance of the manufactured secondary battery is increased by about 5% compared to Example 1, and the life characteristics are deteriorated.

In addition, in the case of Comparative Example 3, the separator, in which a large amount of binders are used, is used together with the gel polymer electrolyte, and thus the resistance is increased by about 6% compared to Example 1, and the cell stiffness is decreased and the thermal stability is deteriorated due to the use of the liquid electrolyte composition.

In addition, in the case of Comparative Example 4, the polymerization initiator is included in the gel polymer electrolyte composition rather than the adhesive composition, and the pre-gelation of the gel polymer electrolyte composition is considerably progressed. In addition, Comparative Example 4 uses both the gel polymer electrolyte and the separator containing a large amount of binders. Accordingly, the secondary battery manufactured in Comparative Example 4 has an increase in resistance by about 11% and significantly deteriorated life characteristics compared to that of Example 1. Meanwhile, in the case of Comparative Example 4, the thermal stability significantly deteriorates, and this seems to be because the inorganic particle content of the separator is relatively small, and thus the heat shrinkage and short circuit of the separator are not sufficiently prevented.

### [Description of the Symbols]

10: Secondary Battery
100: Electrode assembly
U: Basic unit
110: First electrode
110a: One end portion of first electrode
120: Second electrode
120a: One end portion of second electrode
130: Separator
131: Porous substrate
132a, 132b: Ceramic coating layer
140: Applied adhesive composition
200a: Gel Polymer Electrolyte
200: Gel polymer electrolyte composition
300: Battery case
310: Cover
400, 500: Electrode tap
610: First electrode reel
620: Second electrode reel
630: Separator reel
700: Table
810: First cutter
820: Second cutter
910: First transfer device
920: Second transfer device
1010: First header
1020: Second header
1101: First electrode sheet
1201: Second electrode sheet
1110: First nozzle
1120: Second nozzle

## Claims

1. A method for manufacturing a secondary battery (10), the method comprising:
preparing an electrode assembly (100) in which electrodes (110, 120) and a separator (130) are alternately laminated, and an adhesive composition (140) is applied to a surface of at least one among the electrodes (110, 120) and the separator (130), thereby allowing the electrodes (110, 120) and the separator (130) to adhere to each other;
accommodating the electrode assembly (100) in a battery case (300);
injecting a gel polymer electrolyte composition (200) into the battery case (300) to impregnate the electrode assembly (100) with the gel polymer electrolyte composition (200); and
curing the gel polymer electrolyte composition (200),
wherein the separator (130) comprises a porous substrate (131) and ceramic coating layers (132a, 132b) disposed on both surfaces of the porous substrate (131),
the ceramic coating layers (132a, 132b) comprises from 92 wt% to less than 100 wt% of inorganic particles and from more than 0 wt% to 8 wt% of a binder,
the gel polymer electrolyte composition (200) comprises a lithium salt, an organic solvent, and an oligomer compound and does not include a polymerization initiator,
the adhesive composition (140) comprises an adhesive and a polymerization initiator,
the adhesive and the polymerization initiator are dissolved by the injection of the gel polymer electrolyte composition (200), and
the gel polymer electrolyte composition (200) is cured by the dissolved polymerization initiator.

2. The method of claim 1, wherein the adhesive composition (140) comprises from 90 wt% to 99 wt% of the adhesive and from 1 wt% to 10 wt% of the polymerization initiator.

3. The method of claim 1, wherein the adhesive is an acrylate-based adhesive.

4. The method of claim 1, wherein the adhesive composition (140) is applied in the form of a plurality of patterns spaced apart from each other.

5. The method of claim 1, wherein after the adhesive is dissolved, traces of the adhesive applied are present on the surface of one among the separator (130) and the electrodes (110, 120).

6. The method of claim 6, wherein an area of the adhesive composition (140) applied is from more than 0% to 1% with respect to an area of the surface on which the separator (130) and the electrodes (110, 120) are in contact with each other.

7. The method of claim 1, wherein the ceramic coating layers (132a, 132b) comprise from 93 wt% to 98 wt% of inorganic particles and from 2 wt% to 7 wt% of a binder.

8. The method of claim 7, wherein the binder comprises an acrylic binder.

9. The method of claim 8, wherein the acrylic binder comprises at least one selected from the group consisting of a copolymer of ethylhexyl acrylate and methyl methacrylate; polymethylmethacrylate; polyethylhexyl acrylate; polybutylacrylate; polyacrylonitrile; and a copolymer of butyl acrylate and methyl methacrylate.

10. The method of claim 1, wherein the ceramic coating layers (132a, 132b) has a thickness of from 0.1 µm to 10 µm.

11. The method of claim 1, wherein the separator (130) has a thickness of from 1 µm to 20 µm.

12. The method of claim 1, wherein the oligomer compound comprises at least one selected from the group consisting of a fluorine-based oligomer, a polycarbonate-based oligomer, and a polysiloxane-based oligomer.

13. The method of claim 1, wherein the electrodes (110, 120) comprise a first electrode (110) and a second electrode (120), and
the electrode assembly (100) is prepared by a method comprising steps (a) to (d) below:
(a) applying the adhesive composition to at least a portion of the separator (130) and the first electrode (110);
(b) bonding the separator (130) and the first electrode (110) through the applied adhesive composition (140);
(c) folding one side of the separator (130) to cover the first electrode (110);
(d) applying the adhesive composition to at least a portion of the separator (130) and the second electrode (120);
(e) bonding the separator (130) and the second electrode (120) through the applied adhesive composition (140); and
(d) folding the other side of the separator (130) to cover the second electrode (120).

## Patentansprüche

1. Verfahren zur Herstellung einer Sekundärbatterie (10), das Verfahren umfassend:
das Herstellen einer Elektrodenanordnung (100), in welcher Elektroden (110, 120) und ein Separator (130) abwechselnd laminiert sind, und eine Klebstoffzusammensetzung (140) auf eine Oberfläche mindestens einer der Elektroden (110, 120) und den Separator (130) aufgetragen ist, wodurch die Elektroden (110, 120) und der Separator (130) miteinander verklebt werden;
das Unterbringen der Elektrodenanordnung (100) in einem Batteriegehäuse (300);
das Einspritzen einer Gelpolymerelektrolytzusammensetzung (200) in das Batteriegehäuse (300), um die Elektrodenanordnung (100) mit der Gelpolymerelektrolytzusammensetzung (200) zu imprägnieren; und
das Aushärten der Gelpolymerelektrolytzusammensetzung (200),
worin der Separator (130) ein poröses Substrat (131) und auf beiden Oberflächen des porösen Substrats (131) angeordnete Keramikbeschichtungen (132a, 132b) umfasst,
die Keramikbeschichtungen (132a, 132b) 92 Gew.-% bis weniger als 100 Gew.-% anorganische Teilchen und mehr als 0 Gew.-% bis 8 Gew.-% eines Bindemittels umfassen,
die Gelpolymerelektrolytzusammensetzung (200) ein Lithiumsalz, ein organisches Lösungsmittel und eine Oligomerverbindung umfasst und keinen Polymerisationsinitiator enthält,
die Klebstoffzusammensetzung (140) einen Klebstoff und einen Polymerisationsinitiator umfasst,
der Klebstoff und der Polymerisationsinitiator durch Einspritzen der Gelpolymerelektrolytzusammensetzung (200) gelöst werden und
die Gelpolymerelektrolytzusammensetzung (200) durch den gelösten Polymerisationsinitiator ausgehärtet wird.

2. Verfahren gemäß Anspruch 1, worin die Klebstoffzusammensetzung (140) 90 Gew.-% bis 99 Gew.-% des Klebstoffs und 1 Gew.-% bis 10 Gew.-% des Polymerisationsinitiators umfasst.

3. Verfahren gemäß Anspruch 1, worin der Klebstoff ein Acrylat-basierter Klebstoff ist.

4. Verfahren gemäß Anspruch 1, worin die Klebstoffzusammensetzung (140) in Form einer Vielzahl von voneinander beabstandeten Mustern aufgetragen wird.

5. Verfahren gemäß Anspruch 1, worin, nachdem der Klebstoff gelöst ist, Spuren des aufgetragenen Klebstoffs auf der Oberfläche entweder des Separators (130) oder der Elektroden (110, 120) vorhanden sind.

6. Verfahren gemäß Anspruch 6, worin ein Bereich der aufgetragenen Klebstoffzusammensetzung (140) mehr als 0% bis 1%, bezogen auf einen Bereich der Oberfläche, auf dem der Separator (130) und die Elektroden (110, 120) miteinander in Kontakt stehen, beträgt.

7. Verfahren gemäß Anspruch 1, worin die Keramikbeschichtungen (132a, 132b) 93 Gew.-% bis 98 Gew.-% anorganische Teilchen und 2 Gew.-% bis 7 Gew.-% eines Bindemittels umfassen.

8. Verfahren gemäß Anspruch 7, worin das Bindemittel ein Acrylbindemittel umfasst.

9. Verfahren gemäß Anspruch 8, worin das Acrylbindemittel mindestens eines umfasst, ausgewählt aus der Gruppe, bestehend aus einem Copolymer von Ethylhexylacrylat und Methylmethacrylat; Polymethylmethacrylat; Polyethylhexylacrylat; Polybutylacrylat; Polyacrylnitril; und einem Copolymer von Butylacrylat und Methylmethacrylat.

10. Verfahren gemäß Anspruch 1, worin die Keramikbeschichtungen (132a, 132b) eine Dicke von 0,1 µm bis 10 µm aufweisen.

11. Verfahren gemäß Anspruch 1, worin der Separator (130) eine Dicke von 1 µm bis 20 µm aufweist.

12. Verfahren gemäß Anspruch 1, worin die Oligomerverbindung mindestens eines umfasst, ausgewählt aus der Gruppe, bestehend aus einem Fluor-basierten Oligomer, einem Polycarbonat-basierten Oligomer und einem Polysiloxanbasierten Oligomer.

13. Verfahren gemäß Anspruch 1, worin die Elektroden (110, 120) eine erste Elektrode (110) und eine zweite Elektrode (120) umfassen, und
die Elektrodenanordnung (100) durch ein Verfahren hergestellt ist, das die nachfolgenden Schritte (a) bis (d) umfasst:
(a) das Auftragen der Klebstoffzusammensetzung auf mindestens einen Teil des Separators (130) und der ersten Elektrode (110);
(b) das Verbinden des Separators (130) und der ersten Elektrode (110) durch die aufgetragene Klebstoffzusammensetzung (140);
(c) das Umklappen einer Seite des Separators (130), um die erste Elektrode (110) abzudecken;
(d) das Auftragen der Klebstoffzusammensetzung auf mindestens einen Teil des Separators (130) und der zweiten Elektrode (120);
(e) das Verbinden des Separators (130) und der zweiten Elektrode (120) durch die aufgetragene Klebstoffzusammensetzung (140); und
(d) das Umklappen der anderen Seite des Separators (130), um die zweite Elektrode (120) abzudecken.

## Revendications

1. Procédé de fabrication d'une batterie secondaire (10), le procédé comprenant :
la préparation d'un ensemble d'électrodes (100) dans lequel des électrodes (110, 120) et un séparateur (130) sont empilés en alternance, et une composition adhésive (140) est appliquée sur une surface d'au moins un élément parmi les électrodes (110, 120) et le séparateur (130), permettant ainsi aux électrodes (110, 120) et au séparateur (130) d'adhérer les uns aux autres ;
le logement de l'ensemble d'électrodes (100) dans un boîtier de batterie (300) ;
l'injection d'une composition d'électrolyte polymère en gel (200) dans le boîtier de batterie (300) pour imprégner l'ensemble d'électrodes (100) avec la composition d'électrolyte polymère en gel (200) ; et
la soumission de la composition d'électrolyte polymère en gel (200) à un durcissement,
dans lequel le séparateur (130) comprend un substrat poreux (131) et des couches de revêtement céramique (132a, 132b) disposées sur les deux surfaces du substrat poreux (131),
les couches de revêtement céramique (132a, 132b) comprennent de 92 % en poids à moins de 100 % en poids de particules inorganiques et de plus de 0 % en poids à 8 % en poids d'un liant,
la composition d'électrolyte polymère en gel (200) comprend un sel de lithium, un solvant organique et un composé oligomère et n'inclut pas d'initiateur de polymérisation,
la composition adhésive (140) comprend un adhésif et un initiateur de polymérisation,
l'adhésif et l'initiateur de polymérisation sont dissous par l'injection de la composition d'électrolyte polymère en gel (200), et
la composition d'électrolyte polymère en gel (200) est soumise à un durcissement par l'initiateur de polymérisation dissous.

2. Procédé selon la revendication 1, dans lequel la composition adhésive (140) comprend de 90 % en poids à 99 % en poids de l'adhésif et de 1 % en poids à 10 % en poids de l'initiateur de polymérisation.

3. Procédé selon la revendication 1, dans lequel l'adhésif est un adhésif à base d'acrylate.

4. Procédé selon la revendication 1, dans lequel la composition adhésive (140) est appliquée sous la forme d'une pluralité de motifs espacés les uns des autres.

5. Procédé selon la revendication 1, dans lequel, après que l'adhésif a été dissous, des traces de l'adhésif appliqué sont présentes sur la surface de l'un parmi le séparateur (130) et les électrodes (110, 120).

6. Procédé selon la revendication 6, dans lequel une aire de la composition adhésive (140) appliquée est de plus de 0 % à 1 % par rapport à une aire de la surface sur laquelle le séparateur (130) et les électrodes (110, 120) sont en contact l'un avec l'autre.

7. Procédé selon la revendication 1, dans lequel les couches de revêtement céramique (132a, 132b) comprennent de 93 % en poids à 98 % en poids de particules inorganiques et de 2 % en poids à 7 % en poids d'un liant.

8. Procédé selon la revendication 7, dans lequel le liant comprend un liant acrylique.

9. Procédé selon la revendication 8, dans lequel le liant acrylique comprend au moins un élément choisi dans le groupe constitué d'un copolymère d'acrylate d'éthylhexyle et de méthacrylate de méthyle ; d'un polyméthacrylate de méthyle ; d'un polyacrylate d'éthylhexyle ; d'un polyacrylate de butyle ; d'un polyacrylonitrile ; et d'un copolymère d'acrylate de butyle et de méthacrylate de méthyle.

10. Procédé selon la revendication 1, dans lequel les couches de revêtement céramique (132a, 132b) présentent une épaisseur de 0,1 µm à 10 µm.

11. Procédé selon la revendication 1, dans lequel le séparateur (130) présente une épaisseur de 1 µm à 20 µm.

12. Procédé selon la revendication 1, dans lequel le composé oligomère comprend au moins un élément choisi dans le groupe constitué d'un oligomère à base de fluor, d'un oligomère à base de polycarbonate et d'un oligomère à base de polysiloxane.

13. Procédé selon la revendication 1, dans lequel les électrodes (110, 120) comprennent une première électrode (110) et une seconde électrode (120), et
l'ensemble d'électrodes (100) est préparé par un procédé comprenant les étapes (a) à (d) ci-dessous :
(a) l'application de la composition adhésive sur au moins une portion du séparateur (130) et de la première électrode (110) ;
(b) la liaison du séparateur (130) et de la première électrode (110) par l'intermédiaire de la composition adhésive (140) appliquée ;
(c) le pliage d'un côté du séparateur (130) pour recouvrir la première électrode (110) ;
(d) l'application de la composition adhésive sur au moins une portion du séparateur (130) et de la seconde électrode (120) ;
(e) la liaison du séparateur (130) et de la seconde électrode (120) par l'intermédiaire de la composition adhésive (140) appliquée ; et
(d) le pliage de l'autre côté du séparateur (130) pour recouvrir la seconde électrode (120).
